(19) Europäisches Patentamt
European Patent Office
Office européen des brevets

(11) **EP 2 340 417 B1**

(12) **EUROPÄISCHE PATENTSCHRIFT**

(45) Veröffentlichungstag und Bekanntmachung des Hinweises auf die Patenterteilung:
**06.09.2017 Patentblatt 2017/36**

(21) Anmeldenummer: **09778793.1**

(22) Anmeldetag: **01.10.2009**

(51) Int Cl.:
*G01D 5/245* (2006.01)     *G01D 5/249* (2006.01)
*G01D 5/347* (2006.01)     *H03M 1/28* (2006.01)

(86) Internationale Anmeldenummer:
**PCT/EP2009/007043**

(87) Internationale Veröffentlichungsnummer:
**WO 2010/049049 (06.05.2010 Gazette 2010/18)**

(54) **ABSOLUTE POSITIONSMESSVORRICHTUNG**

ABSOLUTE POSITION MEASURING DEVICE

DISPOSITIF DE MESURE DE POSITION ABSOLUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.10.2008 DE 102008053986**

(43) Veröffentlichungstag der Anmeldung:
**06.07.2011 Patentblatt 2011/27**

(73) Patentinhaber: **Dr. Johannes Heidenhain GmbH 83301 Traunreut (DE)**

(72) Erfinder: **LINGK, Christoph 83278 Traunstein (DE)**

(56) Entgegenhaltungen:
**EP-B1- 0 800 725     WO-A1-2005/119179
US-A- 5 135 081     US-A- 5 173 693
US-B1- 6 330 522**

EP 2 340 417 B1

**Beschreibung**

Auf vielen Gebieten werden zur Bestimmung der Position zweier relativ zueinander bewegter Körper vermehrt absolute Winkelmessvorrichtungen eingesetzt. Absolute Winkelmessvorrichtungen haben gegenüber rein inkremental messenden Systemen den Vorteil, dass in jeder Relativlage auch nach Unterbrechung der Versorgungsenergie sofort eine korrekte Positionsinformation ausgegeben werden kann.

Die absolute Position wird dabei von einer Winkelcodierung verkörpert. Besonders Platz sparend ist die Anordnung der Positionsinformation in einer einzigen Codespur mit in Messrichtung hintereinander angeordneten Codeelementen. Die Codeelemente sind dabei in pseudozufälliger Verteilung hintereinander angeordnet, so dass eine bestimmte Anzahl von aufeinander folgenden Codeelementen jeweils ein Codewort bildet, das die absolute Position eindeutig definiert. Bei der Verschiebung der Abtasteinrichtung um ein einziges Codeelement wird bereits ein neues Codewort gebildet und über den gesamten absolut zu erfassenden Umfang steht eine Folge von unterschiedlichen Codewörtern zur Verfügung. Ein derartiger serieller bzw. sequentieller Code wird auch oft als Kettencode oder als Pseudo-Random-Code (PRC) bezeichnet.

Zur Bestimmung der absoluten Position aus den abgetasteten Codewörtern - auch Decodierung genannt - wird eine Decodiertabelle eingesetzt, in der jedem Codewort eine Position zugeordnet ist. Zur Zuordnung der absoluten Position zu einem abgetasteten Codewort bildet das Codewort die Adresse für die Decodiertabelle, so dass am Ausgang die für dieses Codewort abgelegte absolute Position ansteht und zur Weiterverarbeitung zur Verfügung steht. Diese nichtflüchtigen Tabellen können heute in einem ASIC hardwareverdrahtet ausgelegt sein, um einen schnellen Zugriff zu ermöglichen.

Die Anforderungen an die Auflösung von Winkelmessvorrichtungen werden immer höher, so dass über 360° viele Positionen eindeutig zu codieren sind.

Je mehr Positionen codiert werden müssen, umso aufwendiger ist die nachfolgende Decodierung. Problematisch bei einer seriellen Codierung ist, dass für eine hohe Auflösung sehr viele verschiedene Codewörter generiert und decodiert werden müssen. Erfolgt die Decodierung mittels Tabellen, ist eine große Tabelle erforderlich, in der für jedes mögliche Codewort eine dazugehörige absolute Position abgelegt ist. Erfolgt die Decodierung mittels eines Rechners, führt dies zu relativ langen Rechenzeiten.

Die US 6,330,522 B1 zeigt eine Maßnahme auf, wie eine Winkelcodierung und eine Winkelmessvorrichtung ausgestaltet werden kann, um den Aufwand der Decodierung zu verringern. Dabei wird eine erste Codesequenz und eine zweite Codesequenz in parallel zueinander verlaufenden Spuren über 360° angeordnet. Die erste Codesequenz ist fünf mal über 360° angeordnet und die zweite Codesequenz ist vierzehn mal über 360° angeordnet. Die Codesequenzen schließen unterschiedliche Winkelsektoren ein. Die Bitbreite der ersten Codesequenz unterscheidet sich von der Bitbreite der zweiten Codesequenz. Die Decodiereinrichtung weist einen ersten Wertevorrat zur Decodierung der ersten Codesequenz sowie einen zweiten Wertevorrat zur Decodierung der zweiten Codesequenz auf. Die absolute Position ist durch die Kombination beider Teilpositionen an jeder Stelle über 360° eindeutig.

Nachteilig dabei ist, dass über 360° nur eine Anzahl von Positionen codierbar ist, die jeweils ein ganzzahliges Vielfaches der Länge beider Codesequenzen ist.

Aufgabe der Erfindung ist es daher, eine Winkelcodierung anzugeben, mit der eine beliebige Anzahl von Positionen über 360° eindeutig codiert werden kann, und mit der in einer Winkelmessvorrichtung eine einfache Decodierung der durch Abtastung dieser Winkelcodierung generierten Folgen von Codewörtern ermöglicht wird.

Diese Aufgabe wird durch die im Anspruch 1 angegebene Winkelcodierung gelöst.

Im Anspruch 11 ist eine absolute Winkelmessvorrichtung mit einer derartigen Winkelcodierung angegeben.

Die absolute Winkelcodierung weist mehrere innerhalb von 360° angeordnete Codesequenzen auf, die in Kombination die 360° eindeutig absolut codieren, von denen

eine erste Codesequenz, bestehend aus einer Folge von Codeelementen, einen ersten Winkelsektor einschließt und mehrmals aufeinanderfolgend angeordnet ist, sowie mehrmals zyklisch fortgesetzt ist,
eine zweite Codesequenz, bestehend aus einer Folge von Codeelementen, einen zweiten Winkelsektor einschließt und mehrmals aufeinanderfolgend angeordnet ist, sowie mehrmals zyklisch fortgesetzt ist, wobei
der erste Winkelsektor ungleich dem zweiten Winkelsektor ist, und zumindest eine der Codesequenzen innerhalb der 360° nur teilweise ausgebildet ist und eine Stoßstelle mit der nachfolgenden Codesequenz bildet.

In anderen Worten ausgedrückt, ist zumindest eine der beiden Codesequenzen einmal innerhalb 360° nur teilweise aufgetragen, und dieser Teil an die nächste Codesequenz angeschlossen. An dieser Anschlussstelle ist diese Codesequenz unterbrochen, da hier ein Stoßbereich entsteht, an dem bei der Abtastung eine neue Folge von Codeelementen, d. h. neue Bitpattern bzw. Wörter, entsteht. Neue Bitpattern bedeutet, dass diese Bitpattern nicht Bestandteil der Codesequenzen und ihrer zyklischen Fortsetzungen sind.

Die Codesequenzen sind dabei kreisförmig an einer Scheibe oder über den Umfang einer Trommel angeordnet.

Ein Codeelement ist jeweils ein Bereich der Winkelcodierung, aus dem ein Bit ableitbar ist.

Codesequenz bedeutet eine Abfolge von Codeelementen, die über die Gesamtlänge der Codesequenz unterschiedliche Positionen im Raster eines Codeelementes definiert.

Zyklisch fortgesetzte Codesequenz bedeutet, dass sich am Ende der Codesequenz der Anfang dieser gleichen Codesequenz wieder anschließt.

Die erfindungsgemäß ausgebildete Winkelcodierung ermöglicht nun insbesondere über 360° $2^k$ verschiedene Positionen zu codieren, mit vorzugsweise k>4 und ganzzahlig.

Die Codeelemente der ersten Codesequenz und der zweiten Codesequenz schließen vorzugsweise jeweils gleiche Winkelsektoren ein. Dies vorausgesetzt, kann die Größe eines Winkelsektors besonders einfach durch die Anzahl von Codeelementen definiert werden.

Die maximale Anzahl von verschiedenen Positionen erhält man, wenn sich die Länge der ersten Codesequenz von der Länge der zweiten Codesequenz um 1 unterscheidet. Dabei ist die Länge der ersten Codesequenz die Anzahl der Codeelemente der ersten Codesequenz und die Länge der zweiten Codesequenz die Anzahl der Codeelemente der zweiten Codesequenz.

Eine relativ einfache Auswertung der durch Abtastung der Codesequenzen gewonnenen Wörter (Bitpattern) ergibt sich, wenn die erste Codesequenz und die zweite Codesequenz in verschiedenen Spuren angeordnet sind.

Bei der Anordnung in zwei Spuren ist in den beiden Spuren jeweils über 360° eine gleiche Anzahl

$M_1 < KGV (L_A , L_B)$ von Codeelementen angeordnet, mit
$KGV (L_A , L_B)$ = kleinstes gemeinsames Vielfaches von $L_A$ und $L_B$
$L_A$ = ganzzahlige Anzahl der Codeelemente der ersten Codesequenz
$L_B$ = ganzzahlige Anzahl der Codeelemente der zweiten Codesequenz.

Über die 360° lassen sich mehr unterschiedliche Positionen codieren, wenn die erste Codesequenz und die zweite Codesequenz in einer gemeinsamen Spur angeordnet sind, indem jeweils ein Teil der ersten Codesequenz und ein Teil der zweiten Codesequenz abwechselnd angeordnet ist. Insbesondere folgt auf ein Codeelement der ersten Codesequenz jeweils ein einziges Codeelement der zweiten Codesequenz und auf ein Codeelement der zweiten Codesequenz jeweils ein einziges Codeelement der ersten Codesequenz.

Bei der Anordnung in einer gemeinsamen Spur ist in dieser Spur über 360° eine Anzahl

$M_2 < 2 * KGV (L_A , L_B)$ Codeelemente angeordnet ist, mit
$KGV (L_A , L_B)$ = kleinstes gemeinsames Vielfaches von $L_A$ und $L_B$
$L_A$ = Anzahl der Codeelemente der ersten Codesequenz
$L_B$ = Anzahl der Codeelemente der zweiten Codesequenz.

Soll der durch die beiden Codesequenzen A, B ermittelte Positionswert weiter aufgelöst werden, kann konzentrisch zu der absoluten Winkelcodierung zumindest eine Inkrementalspur angeordnet sein. Die Teilungsperiode dieser Inkrementalspur ist beispielsweise ein Bruchteil der Breite eines Codeelementes der Codesequenzen A, B.

Eine Winkelmessvorrichtung weist nun eine Detektoranordnung zur Abtastung der ersten und der zweiten Codesequenz der Winkelcodierung und zur Generierung von Codewörtern auf, sowie eine Dekodiereinrichtung zur Dekodierung der Codewörter und zur Generierung von Positionswerten.

Die Dekodiereinrichtung weist einen ersten Wertevorrat zur Dekodierung einer ersten Folge von Codewörtern auf, die jeweils bei der Abtastung einer der ersten Codesequenzen sowie ihrer zyklischen Fortsetzung entsteht, und einen zweiten Wertevorrat zur Dekodierung einer zweiten Folge von Codewörtern auf, die jeweils bei der Abtastung einer der zweiten Codesequenzen sowie ihrer zyklischen Fortsetzung entsteht, und die Decodiereinrichtung weist einen weiteren Wertevorrat auf, der zur Decodierung der Stoßstelle der ersten Codesequenz und / oder der zweiten Codesequenz geeignet ist.

Weitere vorteilhafte Ausgestaltungen der Erfindung sind in den abhängigen Ansprüchen angegeben.

Anhand der Zeichnungen werden Ausführungsbeispiele der Erfindung näher erläutert.

Es zeigt

Figur 1     eine erste Winkelmessvorrichtung mit einer ersten Winkelcodierung in schematischer Darstellung;

Figur 2     ein Flussdiagramm und Rechenvorschriften zur Ermittlung der Position der ersten Winkelmessvorrichtung;

Figur 3     ein Diagramm zur Ermittlung der Position aus gelesenen Bitpattern (Wörtern) anhand eines Beispiels der ersten Winkelcodierung;

Figur 4     eine zweite Winkelmessvorrichtung mit einer zweiten Winkelcodierung in schematischer Darstellung;

Figur 5    ein Bitpattern der Detektoranordnung der zweiten Winkelmessvorrichtung;

Figur 6    ein Flussdiagramm und Rechenvorschriften zur Ermittlung der Position der zweiten Winkelmessvorrichtung, und

Figur 7    ein Diagramm zur Ermittlung der Position aus gelesenen Bitpattern (Wörtern) anhand eines Beispiels der zweiten Winkelcodierung.

Bei der Erfindung wird das Nonius-Prinzip eingesetzt. Zur absoluten Positionsmessung werden zwei serielle Codesequenzen A, B eingesetzt, die verschiedene Winkelsektoren $L_A$ und $L_B$ einschließen. An jeder Position innerhalb des Messbereichs von 360° wird nun die eindeutige absolute Position POS aus der Kombination von Teilpositionen $x_A$, $x_B$ der mehreren seriellen Codesequenzen A, B gewonnen. Der Vorteil einer derartigen Codierung besteht darin, dass eine Decodiereinrichtung 3 jeweils nur die relativ kurzen mehreren seriellen Codesequenzen A, B und ihrer zyklischen Fortsetzungen decodieren muss, und dann die eindeutige Position POS über 360° durch relativ einfache Beziehungen aus diesen decodierten Codesequenzen A, B ermittelt werden kann. Erfolgt die Decodierung mittels Tabellen, sind nur mehrere kleine Tabellen erforderlich. Es sind sehr viel weniger Tabelleneinträge notwendig, als absolute Positionen ausgebbar sind.

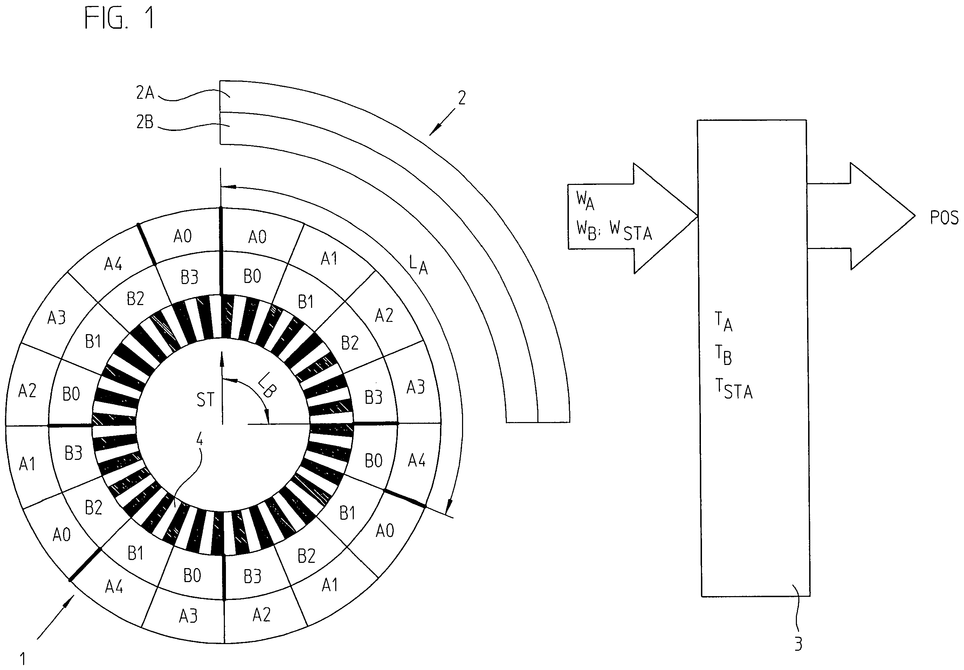

In Figur 1 ist eine erste erfindungsgemäß ausgebildete absolute Winkelcodierung 1 und Winkelmessvorrichtung schematisch dargestellt. Die Winkelcodierung 1 ist derart ausgebildet, dass sie innerhalb einer vollen Umdrehung, also über 360° endlos, an jeder Position eine eindeutige absolute Position POS definiert. Hierzu besteht die Winkelcodierung 1 aus einer hintereinander angeordneten Folge von Codeelementen A0 bis A4 bzw. B0 bis B3, die jeweils einen Winkelsektor gleicher Größe einschließen. Die erste Folge von Codeelementen A0 bis A4 ist in einer ersten Spur angeordnet und bildet die erste Codesequenz A und die zweite Folge von Codeelementen B0 bis B3 ist in einer zweiten Spur angeordnet und bildet die zweite Codesequenz B. Die beiden Codespuren sind konzentrisch zueinander angeordnet. Besonders vorteilhaft ist es, wenn die Codeelemente der beiden Codespuren miteinander fluchten.

Das Prinzip der Positionsmessung beruht auf der Schwebung von zwei Codesequenzen A, B unterschiedlicher Größe des sie einschließenden Winkelsektors $L_A$ und $L_B$. Die Größe der Winkelsektoren $L_A$ und $L_B$ unterscheiden sich hierzu nur geringfügig voneinander, so dass der Winkelsektor $L_A$ kein ganzzahliges Vielfaches des Winkelsektors $L_B$ ist.

Wenn, wie im Beispiel dargestellt, die Winkelsektoren der Codeelemente A0 bis A4 gleich den Winkelsektoren der Codeelemente B0 bis B3 sind, kann zur vereinfachten weiteren Erläuterung die Größe der Winkelsektoren der Codesequenzen A, B durch die Anzahl der Codeelemente dargestellt werden. Somit ist $L_A$ und $L_B$ als Anzahl von Codeelementen ganzzahlig und vorzugsweise teilerfremd. Die maximal zu decodierende Länge $M_{1max}$ ergibt sich, wenn sich $L_A$ von $L_B$ um 1 unterscheidet.

Die erste Codesequenz A ist mit der Bitfolge

$A_0 A_1 A_2 A_3 ... A_{LA-1}$
der Länge $L_A$ gegeben.

Die zweite Codesequenz B ist durch die Bitfolge

$B_0 B_1 B_2 B_3 ... B_{LB-1}$
der Länge $L_B$ gegeben.

Hierbei ist $A_i, B_i \in \{0;1\}$.

Auf Grund der unterschiedlichen Längen $L_A$, $L_B$ von Codesequenz A und Codesequenz B kommt es zu einer Schwebung zwischen den Codesequenzen A und B. Die gesamte codierbare Länge $M_{1max}$ (also die Länge, nach der sich das Bitmuster wiederholt) ist bei $L_A - L_B = 1$ gegeben durch

$$M_{1max} = KGV\,(L_A\,,\,L_B) = L_A * L_B$$

mit $KGV\,(L_A\,,\,L_B)$ = kleinstes gemeinsames Vielfaches von $L_A$ und $L_B$

Für viele Anwendungen wird eine Winkelcodierung 1 gewünscht, die über eine Umdrehung, also innerhalb 360°, $M_1 = 2^k$ unterschiedliche Positionen definiert. Zur Bildung dieser Winkelcodierung 1 ist zumindest eine der Codesequenzen A, B innerhalb der 360° deshalb nicht vollständig ausgebildet, um die geforderten $M_1 = 2^k$ unterschiedlichen Positionen zu definieren.

Zur Positionsmessung wird die Winkelcodierung 1 beispielsweise optisch abgetastet, indem die Codeelemente ein Lichtbündel positionsabhängig modulieren, so dass am Ort einer Detektoranordnung 2 einer Abtasteinrichtung eine positionsabhängige Lichtverteilung entsteht, die von der Detektoranordnung 2 in elektrische Abtastsignale w gewandelt wird. Die Detektoranordnung 2 ist ein Zeilensensor, mit einer in Messrichtung angeordneten Folge von Detektorelementen. Die Detektorelemente sind derart ausgebildet, dass jedem der Codeelemente in jeder Relativlage zumindest eines der Detektorelemente eindeutig zugeordnet ist, und somit aus jedem der Codeelemente ein Bit 0 oder 1 gewonnen werden kann. Hierzu sind beim optischen Abtastprinzip die Codeelemente reflektierend oder nichtreflektierend, bzw. opak oder nichtopak, wobei den reflektierenden Codeelementen beispielsweise der Bitwert 1 und den nichtreflektierenden Codeelementen der Bitwert 0 zugeordnet wird. Die Abfolge dieser Bits (Bitpattern) innerhalb einer Codesequenz A, B, deren Anzahl abhängig von der Abtastlänge $L_L$ ist, bildet für die beiden Codesequenzen A, B jeweils ein Codewort w. Die Abtastsignale, also die Codeworte w werden einer Decodiereinrichtung 3 zugeführt, welche aus jedem der Codeworte w einer der Codesequenzen A, B eine Teilposition $x_A$, $x_B$ ableitet und aus diesen Teilpositionen $x_A$, $x_B$ dann daraus eine absolute Position POS bildet. Bei einer Verschiebung der Detektoranordnung 2 gegenüber der Winkelcodierung 1 um die Breite bzw. Länge eines Codeelementes A, B wird aus jeder der Codesequenzen A, B jeweils ein neues Codewort w erzeugt.

Die Detektoranordnung 2 weist jeweils einen Detektor 2A, 2B zur Abtastung einer der Codesequenzen A, B mit jeweils einer Abtastlänge $L_{L1}$ auf. Für diese Winkelcodierung gibt es nun zwei Bereiche:

1. Bereich:

Dies ist der Bereich, in dem alle Codesequenzen A, B vollständig ausgeführt sind und zyklisch fortgesetzt vorliegen.

2. Bereich:

Es ergibt sich eine neue Stoßstelle ST, an der die zyklische Fortsetzung zumindest einer der Codesequenzen (hier die Codesequenz A) unterbrochen ist. Dieser Bereich über diese Stoßstelle ST bedingt bei der Decodierung eine gesonderte Behandlung mit zumindest einer gesonderten Tabelle, weil die bei der Abtastung generierten Bitpattern über diese Stoßstelle ST nicht in den Tabellen $T_A$ und/oder $T_B$ vorhanden sind.

Anhand eines Beispiels erfolgen nachfolgend weitere Erläuterungen:

Anzahl der benötigten Bits pro Umfang: $M_1 = 16 = 2^4$
Abtastlänge: $L_{L1} = 4$
$L_A = 5$
$L_B = 4$

Die volle Winkelcodierung 1 hat eine Länge = $L_A * L_B = 20$ Positionen und wird zur Schaffung der benötigten Winkelcodierung 1 auf eine Länge $M_1$ von 16 Positionen abgeschnitten bzw. reduziert.

Die Codesequenzen A bzw. B sind gegeben durch:

Codesequenz A: $A_0A_1A_2A_3A_4$
Codesequenz B: $B_0B_1B_2B_3$

Tabelle $T_A$: für Codesequenz A

| Bitpattern | Wort $W_A$ | Teilposition $x_A$ |
|---|---|---|
| $A_0A_1A_2A_3$ | $W_{A0}$ | 0 |
| $A_1A_2A_3A_4$ | $W_{A1}$ | 1 |
| $A_2A_3A_4A_0$ | $W_{A2}$ | 2 |
| $A_3A_4A_0A_1$ | $W_{A3}$ | 3 |
| $A_4A_0A_1A_2$ | $W_{A4}$ | 4 |

Tabelle $T_B$: für Codesequenz B

| Bitpattern | Wort $W_B$ | Teilposition $x_B$ |
|---|---|---|
| $B_0B_1B_2B_3$ | $W_{B0}$ | 0 |
| $B_1B_2B_3B_0$ | $W_{B1}$ | 1 |
| $B_2B_3B_0B_1$ | $W_{B2}$ | 2 |

(fortgesetzt)

| Bitpattern | Wort $W_B$ | Teilposition $x_B$ |
|---|---|---|
| $B_3B_0B_1B_2$ | $W_{B3}$ | 3 |

Was passiert nun mit den Codesequenzen A und B an der neuen Stoßstelle ST?

Zunächst sieht man, dass die Codesequenz B genau an ihrer zyklischen Fortsetzung (also zwischen $B_3$ und $B_0$) abgeschnitten wurde. Bewegt sich die Detektoranordnung 2B also über die Stoßstelle ST hinweg, kommt es zu keinen Problemen mit Codesequenz B ("B-Raster") und mit der Tabelle $T_B$: auf das Bit $B_3$ folgt wieder das Bit $B_0$. Die Codesequenz B sowie ihre zyklische Fortsetzung ist also nicht unterbrochen.

Dagegen ist die Codesequenz A an der Stoßstelle ST unterbrochen, da an der Stoßstelle eine der Codesequenzen A abgeschnitten und nicht vollständig aufgetragen ist. Bei der Codesequenz A tauchen nun beim Überfahren der Stoßstelle ST mit der Detektoranordnung 2A neue Bitpattern auf, die in der Tabelle $T_A$ nicht vorkommen. Auf das Bit $A_0$ folgt eben nicht $A_1$, sondern wieder $A_0$ und dann erst $A_1$. Die neuen Positionen der Codesequenz A an der Stoßstelle ST sind in einer neuen Tabelle $T_{STA}$ ("ST" für Stoßstelle; "A" für die Codesequenz A) zusammengefasst. Diese zusätzliche Tabelle $T_{STA}$ stellt den Wertevorrat zur Decodierung der am Stoß ST von dem Detektor 2A generierten Wörter $W_{STA}$ zur Verfügung. Die Anzahl der Einträge beträgt ($L_{L1}$ -1) und ist im Beispiel 3.

Tabelle $T_{STA}$:

| Bitpattern | Wort $W_{STA}$ | Teilposition $x_{STA}$ |
|---|---|---|
| $A_3A_4A_0A_0$ | $W_{STA0}$ | 0 |
| $A_4A_0A_0A_1$ | $W_{STA1}$ | 1 |
| $A_0A_1A_1A_2$ | $W_{STA2}$ | 2 |

Die Position POS wird nun außerhalb des Stoßes ST aus den Teilpositionen $x_A$ und $x_B$ sowie beim Überfahren des Stoßes ST aus den Teilpositionen $x_A$ und $x_{STA}$ ermittelt.

Anhand einer konkreten Winkelcodierung wird die Erfindung noch weiter erläutert:

Die Codesequenzen A bzw. B sind gegeben durch:

Codesequenz A: 01111
Codesequenz B: 0100

maximal codierbare Länge = KGV(5;4) = 20

vollständige Spur mit der Codesequenz A: 01111011110111101111
vollständige Spur mit der Codesequenz B: 01000100010001000100
auf 16 Positionen reduzierte Spur der Codesequenz A: 0111101111011110
auf 16 Positionen reduzierte Spur der Codesequenz B: 0100010001000100

Abtastlänge $L_L$ = 4 (für jede der beiden Spuren)

Tabelle $T_A$: für Codesequenz A

| Bitpattern | Wort $W_A$ | Teilposition $x_A$ |
|---|---|---|
| 0111 | $W_{A0}$ | 0 |
| 1111 | $W_{A1}$ | 1 |
| 1110 | $W_{A2}$ | 2 |
| 1101 | $W_{A3}$ | 3 |
| 1011 | $W_{A4}$ | 4 |

Tabelle $T_B$: für Codesequenz B

| Bitpattern | Wort $W_B$ | Teilposition $x_B$ |
|---|---|---|
| 0100 | $W_{B0}$ | 0 |
| 1000 | $W_{B1}$ | 1 |
| 0001 | $W_{B2}$ | 2 |
| 0010 | $W_{B3}$ | 3 |

Tabelle $T_{STA}$:

| Bitpattern | Wort $W_{STA}$ | Teilposition $x_{STA}$ |
|---|---|---|
| 1100 | $W_{STA0}$ | 0 |
| 1001 | $W_{STA1}$ | 1 |
| 0011 | $W_{STA2}$ | 2 |

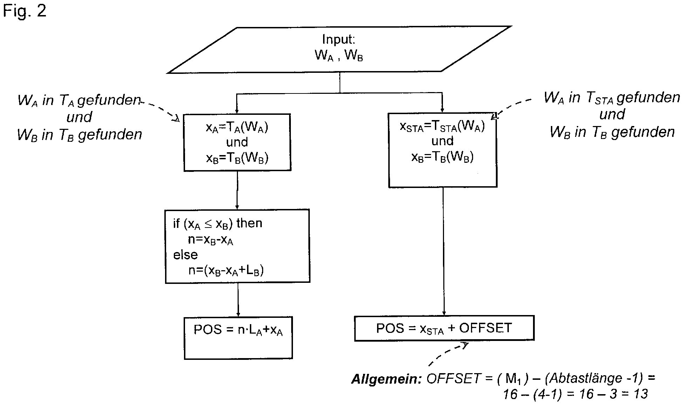

Ein Flussdiagramm und Rechenvorschriften zur Ermittlung der Position POS aus den abgelesenen Bitpattern ist in Figur 2 dargestellt.

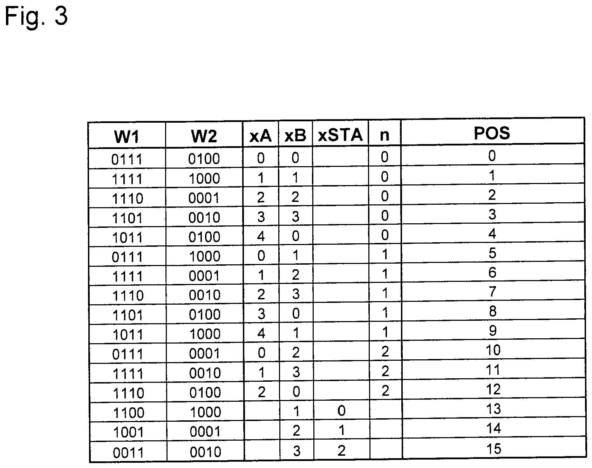

Figur 3 zeigt ein Diagramm zur Ermittlung der Position POS aus den gelesenen Bitpattern (Wörtern) anhand des konkreten Beispiels.

Soll der durch die beiden Codesequenzen A, B ermittelte Positionsmesswert weiter aufgelöst werden, kann die oben beschriebene Winkelcodierung 1 durch eine weitere Spur oder mehrere weitere Spuren mit absoluten Codierungen oder mit Inkrementalteilungen ergänzt sein.

Besonders vorteilhaft ist es, aus der absoluten Winkelcodierung 1 ein periodisches Inkrementalsignal abzuleiten, das eine Periode entsprechend der Breite (Winkelsektor) oder einem ganzzahligen Vielfachen der Breite eines Codeelementes hat.

Zusätzlich ist es vorteilhaft, parallel, also konzentrisch, zu den Spuren mit den Codesequenzen A, B eine Inkrementalspur 4 anzuordnen. Die Teilungsperiode dieser Inkrementalspur 4 ist in vorteilhafter Weise ein Bruchteil der Breite eines Codeelementes der Codesequenzen A, B. Innerhalb eines Winkelsektors eines Codeelementes ist in vorteilhafter Weise eine Anzahl größer oder gleich 1 Inkrementalteilungsperioden angeordnet. Durch diese Dimensionierung der Inkrementalspur 4 ist es möglich, die Breite eines Codeelementes weiter zu unterteilen. Hierzu wird die Inkrementalteilung 4 mittels einer weiteren, nicht dargestellten, Detektoreinheit abgetastet, die in bekannter Weise mehrere gegeneinander phasenverschobene Inkrementalsignale erzeugt. Diese Inkrementalsignale werden einer Interpolationseinheit zugeführt, welche die Inkrementalsignale weiter unterteilt und eine absolute Teilposition innerhalb der Breite eines Codeelementes ausgibt. Die aus der absoluten Winkelcodierung 1 gewonnene absolute Position POS und die aus der Inkrementalspur 4 gewonnene Teilposition werden einer Kombinationseinheit zugeführt, welche daraus eine Gesamtposition bildet, die über den Messbereich von 360° absolut und damit eindeutig ist und eine Auflösung entsprechend dem aus der Inkrementalteilung ermittelten Interpolationsschritt aufweist. So sind über 360° beispielsweise $2^{11}$ Codeelemente angeordnet und eine Inkrementalteilung mit $2^{15}$ Inkrementalperioden. Innerhalb eines Codeelementes sind dann 16 Inkrementalperioden angeordnet.

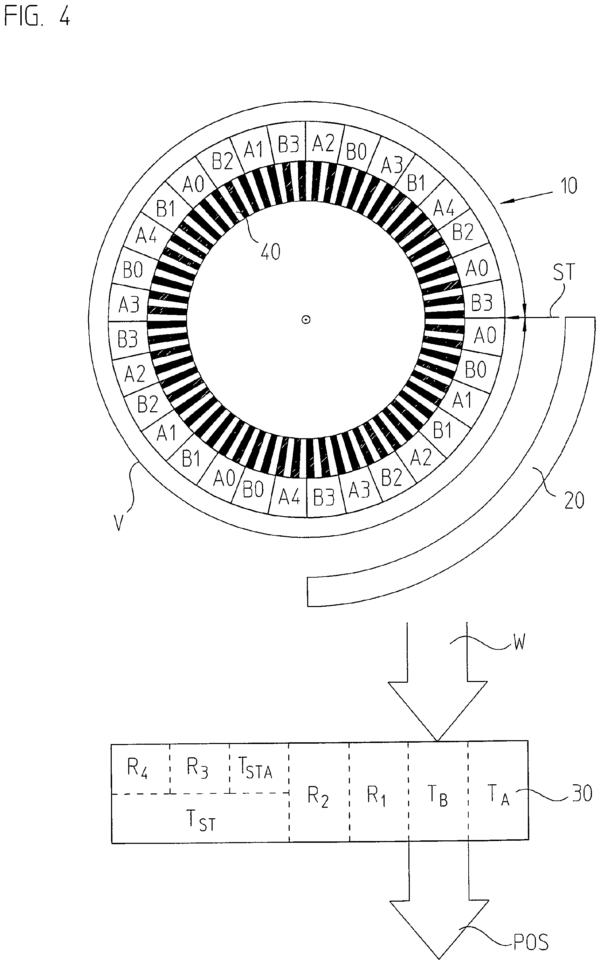

Nachfolgend wird nun anhand der Figuren 4 bis 7 ein zweites Ausführungsbeispiel der Erfindung beschrieben. Die Winkelcodierung 10 wird dann durch die abwechselnde Anordnung eines Codeelementes (Bits) aus der Codesequenz A und dann eines Codeelementes (Bits) aus der Codesequenz B hergestellt:

$$A_0B_0\ A_1B_1\ A_2B_2\ \ldots\ A_{LA-1}B_{LB-1}\ |A_0B_0\ldots$$
$$\overleftrightarrow{M_{2max} = 2 * L_A * L_B}$$

Auf Grund der unterschiedlichen Längen $L_A$, $L_B$ von Codesequenz A und Codesequenz B kommt es zu einer Schwebung zwischen den Codesequenzen A und B.

Die gesamte codierbare Länge $M_{2max}$ (also die Länge, nach der sich das Bitmuster wiederholt) ist bei $L_A - L_B = 1$ gegeben durch

$$M_{2max} = 2 * KGV (L_A , L_B) = 2 * L_A * L_B$$

mit KGV $(L_A , L_B)$ = kleinstes gemeinsames Vielfaches von $L_A$ und $L_B$

Zur Bildung der Winkelcodierung 10 ist wiederum zumindest eine der Codesequenzen A, B innerhalb der 360° nicht vollständig ausgebildet, um beispielsweise die geforderten $M_2 = 2^k$ unterschiedlichen Positionen zu definieren. Die Winkelcodierung 10 ist wiederum gegeben durch die Längen $L_A$ und $L_B$ der Codesequenzen A und B, wobei $L_A \neq L_B$ und $L_A$ und $L_B$ ganzzahlig. Da die Codeelemente alle den gleichen Winkelsektor einschließen, werden die Längen $L_A$ und $L_B$ wieder als Anzahl von Codeelementen der entsprechenden Codesequenz A, B definiert.

Gegeben sei nun weiterhin eine Detektoranordnung 20 mit einer Abtastlänge $L_{L2}$, wobei $L_{L2}$ geradzahlig. Für dieses System gibt es nun zwei Bereiche:

1. Bereich: Positionen 0... bis $(M_2-L_{L2})$:

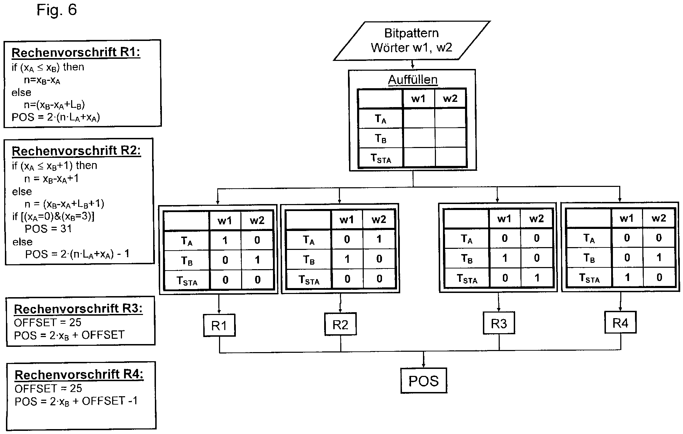

Dies ist der Bereich, in dem für die Winkelcodierung 10 über 360° nur vollständige Codesequenzen A und B vorliegen. Die Gesamtposition POS wird hier mittels der Rechenvorschriften $R_1$ und $R_2$ gemäß der Figur 6 berechnet.

2. Bereich: Positionen $(M_2-L_{L2}+1)$...bis $(M_2-1)$:

An der Stoßstelle ST ist zumindest eine der Codesequenzen A, B abgeschnitten und somit die zyklische Fortsetzung zumindest einer der Codesequenzen (hier die Codesequenz A) unterbrochen. Dieser Bereich über diese Stoßstelle ST bedingt eine gesonderte Behandlung mit zumindest einer gesonderten Tabelle, weil die bei der Abtastung generierten Bitpattern über diese Stoßstelle ST nicht in den Tabellen $T_A$ und/oder $T_B$ vorhanden sind.

Anhand eines Beispiels erfolgen nachfolgend weitere Erläuterungen:

Anzahl der benötigten Bits pro Umfang: $M_2 = 32 = 2^5$
Abtastlänge: $L_{L2} = 8$
$L_A = 5$
$L_B = 4$

Die volle Winkelcodierung 1 hat eine Länge

$$M_{2max} = 2 * L_A * L_B$$

Im Beispiel also 40 Positionen und wird zur Schaffung der benötigten Winkelcodierung 10 auf eine Länge $M_2$ von 32 Positionen abgeschnitten bzw. reduziert.

Die Codesequenzen A bzw. B sind gegeben durch:

Codesequenz A:    $A_0A_1A_2A_3A_4$
Codesequenz B:    $B_0B_1B_2B_3$

Die Tabellen $T_A$ und $T_B$ sind dann gegeben durch:

Tabelle $T_A$: für Codesequenz A

| Bitpattern | Wort w | Teilposition $x_A$ |
|---|---|---|
| $A_0A_1A_2A_3$ | $W_{A0}$ | 0 |
| $A_1A_2A_3A_4$ | $W_{A1}$ | 1 |
| $A_2A_3A_4A_0$ | $W_{A2}$ | 2 |
| $A_3A_4A_0A_1$ | $W_{A3}$ | 3 |
| $A_4A_0A_1A_2$ | $W_{A4}$ | 4 |

Tabelle $T_B$: für Codesequenz B

| Bitpattern | Wort w | Teilposition $x_B$ |
|---|---|---|
| $B_0B_1B_2B_3$ | $W_{B0}$ | 0 |
| $B_1B_2B_3B_0$ | $W_{B1}$ | 1 |
| $B_2B_3B_0B_1$ | $W_{B2}$ | 2 |
| $B_3B_0B_1B_2$ | $W_{B3}$ | 3 |

Was passiert nun mit den Codesequenzen A und B an der neuen Stoßstelle ST?

Zunächst sieht man, dass die Codesequenz B genau an ihrer zyklischen Fortsetzung (also zwischen $B_3$ und $B_0$) abgeschnitten wurde. Bewegt sich die Detektoranordnung 20 also über die Stoßstelle ST hinweg, kommt es zu keinen Problemen mit Codesequenz B ("B-Raster") und mit der Tabelle $T_B$: auf das Bit $B_3$ folgt wieder das Bit $B_0$. Die Codesequenz B sowie ihre zyklische Fortsetzung ist also nicht unterbrochen.

Dagegen ist die Codesequenz A an der Stoßstelle ST unterbrochen. Bei der Codesequenz A tauchen nun beim Überfahren der Stoßstelle ST mit der Detektoranordnung 20 neue Bitpattern auf, die in der Tabelle $T_A$ nicht vorkommen. Auf das Bit $A_0$ folgt eben nicht $A_1$, sondern wieder $A_0$ und dann erst $A_1$. Die neuen Positionen der Codesequenz A an der Stoßstelle ST können in einer neuen Tabelle $T_{STA}$ ("ST" für Stoßstelle; "A" für die Codesequenz A) zusammengefasst werden.

Tabelle $T_{STA}$:

| Bitpattern | Wort w | Teilposition $x_{STA}$ |
|---|---|---|
| $A_3A_4A_0A_0$ | $W_{STA0}$ | 0 |
| $A_4A_0A_0A_1$ | $W_{STA1}$ | 1 |
| $A_0A_0A_1A_2$ | $W_{STA2}$ | 2 |

Die Rechenvorschriften R1, R2, R3 und R4 zur Ermittlung der Position POS sind in Figur 6 angegeben Es ist anzumerken, dass diese Rechenvorschriften R1, R2, R3 und R4 nur beispielhaft angegeben sind, da hier auch andere Beziehungen angesetzt werden können.

Eine andere Möglichkeit zur Ermittlung der Positionen $POS_{ST}$ an der Stoßstelle ST besteht darin, dass die aufeinanderfolgenden Bitpattern in ihrer Gesamtheit betrachtet werden. Hierzu werden die $(L_{L2}-1) = 7$ Bitpattern des Stoßbereiches ST in eine Tabelle $T_{ST}$ geschrieben, wobei die Wortlänge in dieser Tabelle $T_{ST}$ nun $L_{L2}$ ist, im Beispiel 8 ist.

Tabelle $T_{ST}$:

| Bitpattern | Wort w | Position $x_{ST}$ |
|---|---|---|
| $B_0A_3B_1A_4B_2A_0B_3A_0$ | $W_{ST0}$ | 25 |
| $A_3B_1A_4B_2A_0B_3A_0B_0$ | $W_{ST1}$ | 26 |
| $B_1A_4B_2A_0B_3A_0B_0A_1$ | $W_{ST2}$ | 27 |
| $A_4B_2A_0B_3A_0B_0A_1B$ | $W_{ST3}$ | 28 |
| $B_2A_0B_3A_0B_0A_1B_1A_2$ | $W_{ST4}$ | 29 |
| $A_0B_3A_0B_0A_1B_1A_2B_2$ | $W_{ST5}$ | 30 |
| $B_3A_0B_0A_1B_1A_2B_2A_3$ | $W_{ST6}$ | 31 |

Abschließend sei für das obige Beispiel noch ein Code und die zugehörigen Tabellen angegeben:

Codesequenz A:     01111
Codesequenz B:     0100

Vollständige Winkelcodierung (Länge 40 Bits):

00111010100110101011001010111000 10111010

Winkelcodierung 10 (Ausschnitt von 32 Bits aus der vollständigen Winkelcodierung mit 40 Bits):

00111010100110101011001010111000

Tabelle $T_A$: für Codesequenz A

| Bitpattern | Wort w | Teilposition $x_A$ |
|---|---|---|
| 0111 | $W_{A0}$ | 0 |
| 1111 | $W_{A1}$ | 1 |
| 1110 | $W_{A2}$ | 2 |
| 1101 | $W_{A3}$ | 3 |
| 1011 | $W_{A4}$ | 4 |

Tabelle $T_B$: für Codesequenz B

| Bitpattern | Wort w | Teilposition $x_B$ |
|---|---|---|
| 0100 | $W_{B0}$ | 0 |
| 1000 | $W_{B1}$ | 1 |
| 0001 | $W_{B2}$ | 2 |
| 0010 | $W_{B3}$ | 3 |

Tabelle $T_{STA}$:

| Bitpattern | Wort w | Teilposition $X_{STA}$ |
|---|---|---|
| 1100 | $W_{STA0}$ | 0 |
| 1001 | $W_{STA1}$ | 1 |
| 0011 | $W_{STA2}$ | 2 |

Tabelle $T_{ST}$:

| Bitpattern | Wort w | Position $X_{ST}$ |
|---|---|---|
| 01110000 | $W_{ST0}$ | 25 |
| 11100000 | $W_{ST1}$ | 26 |
| 11000001 | $W_{ST2}$ | 27 |
| 10000011 | $W_{ST3}$ | 28 |
| 00000111 | $W_{ST4}$ | 29 |
| 00001110 | $W_{ST5}$ | 30 |
| 00011101 | $W_{ST6}$ | 31 |

An den beiden Beispielen erkennt man, dass es besonders vorteilhaft ist, wenn eine der Codesequenzlängen ($L_A$ oder $L_B$) schon eine Zweierpotenz ist. Im obigen zweiten Beispiel ist die Gesamtlänge $M_2$ = 32 und $L_B$ = 4. Der Vorteil hierbei ist dann, dass nur eine der Codesequenzen A oder B (hier nämlich nur Codesequenz A) "abgeschnitten" werden muss. Bei der anderen Codesequenz (hier die Codesequenz B) bleiben alle Codesequenzen sowie ihre zyklischen Fortsetzungen in der Gesamtheit über 360° vollständig erhalten.

Für die Anzahl der Codeelemente innerhalb 360° gilt dann beim zweiten Beispiel:

$$M_2 = 2 * (\text{KGV} (L_A, L_B) - E * L_A)$$

was bedeutet, dass nur eine der Codesequenzen B unvollständig ist, oder $M_2 = 2 * (\text{KGV} (L_A, L_B) - E * L_B)$ was bedeutet, dass nur eine der Codesequenzen A unvollständig ist, mit E ganzzahlig > 0.

Bei dem oben erörterten Beispiel mit $L_A = 5$ und $L_B = 4$ sowie E = 1 ist eine der Codesequenzen A unvollständig und $M_2 = 32$.

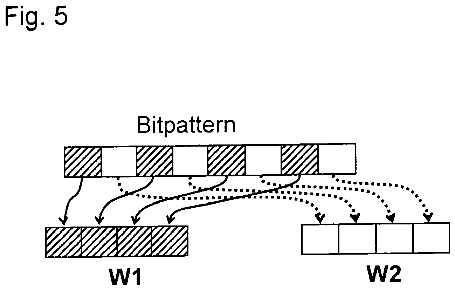

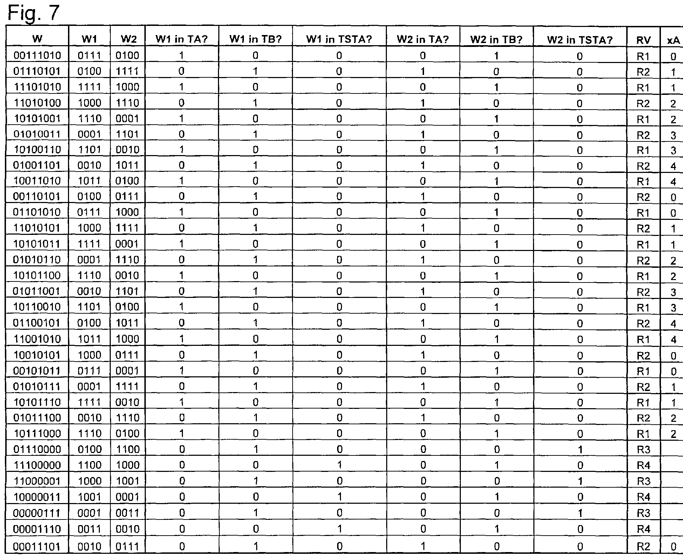

In Figur 7 ist ein Diagramm zur Ermittlung der Position POS aus gelesenen Bitpattern (Wörtern) w anhand des Beispiels der zweiten Winkelcodierung 10 dargestellt. In der zweiten und dritten Spalte sind die aus den Wörtern w nach Figur 5 ermittelten Wörter w1 und w2 dargestellt. Die sechs weiteren Spalten zeigen die Abfrage, ob die Wörter w1 bzw. w2 in den Tabellen $T_A$, $T_B$, $T_{STA}$ gefunden werden. Eine "1" definiert dabei gefunden. Die nächste mit "RV" bezeichnete Spalte definiert die zu verwendende Rechenvorschrift R1, R2, R3 bzw. R4. In den folgenden drei Spalten sind die Teilpositionen $x_A$, $x_B$ und $x_{STA}$ angegeben. Die nächste Spalte enthält den nach den in Figur 6 angegebenen Vorschriften berechneten Wert "n". Die letzte Spalte enthält nun die nach den entsprechenden Rechenvorschriften R1, R2, R3 bzw. R4 errechnete Position POS.

Die Decodiereinrichtung 3, 30 ist vorteilhaft als ASIC ausgebildet, wobei die erforderlichen Tabellen T, also die erforderlichen Wertevorräte, jeweils bei der Fertigung des ASIC's fest verdrahtet ausgebildet sind. Alternativ können die Tabellen T bzw. Wertevorräte aber auch in Festwertspeichern, wie EPROM abgelegt sein.

Bei den erfindungsgemäß ausgeführten Winkelmessvorrichtungen ist eine Mischform von Speichern besonders vorteilhaft, wobei einerseits ein schneller Zugriff auf die Speicherdaten, also die Wertevorräte, erreicht wird und andererseits auch eine schnelle Anpassung an den Anwendungszweck ermöglicht wird. Ausgeführt wird dies, indem einerseits der Wertevorrat $T_A$, $T_B$ für die Codesequenzen A und B sowie ihrer zyklischen Fortsetzungen fest verdrahtet ausgeführt ist und zusätzlich ein noch nach der Maskenherstellung programmierbarer Speicher vorgesehen wird, wobei in diesem programmierbaren Speicher der individuell erforderliche Wertevorrat $T_{ST}$, $T_{STA}$ des Stoßes ST eingespeichert wird, also die Tabellen $T_{ST}$ bzw. $T_{STA}$. Der programmierbare Speicher ist ein Festwertspeicher und ist beispielsweise als EPROM ausgebildet.

Die Tabellen $T_{ST}$ bzw. $T_{STA}$ können bei der Fertigung der Winkelmess-einrichtung fest vorgegeben, also eingespeichert werden. Alternativ können die Tabellen $T_{ST}$ bzw. $T_{STA}$ auch mittels einer vorgegebenen Bildungsvorschrift automatisch generiert und abgespeichert werden, oder das Generieren erfolgt mittels eines Eichlaufes, bei dem jedem abgetasteten Bitpattern (Wort) eine Position zugeordnet und abgespeichert wird.

Wie in Figur 4 schematisch dargestellt, kann die absolute Winkelcodierung 10 entsprechend dem Beispiel der Figur 1 durch eine Inkrementalteilung 40 ergänzt sein. Dabei ist wieder innerhalb eines Winkelsektors eines Codeelementes eine Zahl, in vorteilhafter Weise gleich oder größer 1, Inkrementalteilungsperioden angeordnet.

Die Erfindung ist beim optischen Abtastprinzip besonders vorteilhaft einsetzbar, da eine optisch abtastbare Winkelcodierung 1, 10 mit maximal möglich verschiedenen Positionen über 360° (eine Umdrehung der Winkelcodierung 1, 10) reproduzierbar herstellbar ist und damit eine besonders hochauflösende Positionsmessung ermöglicht wird. Dabei kann die Detektoranordnung 2, 20 und die Decodiereinrichtung 3, 30 gemeinsam in einem Opto-ASIC untergebracht sein.

Die Erfindung ist aber nicht auf das optische Abtastprinzip beschränkt, sondern auch bei magnetischen, induktiven sowie kapazitiven Abtastprinzipien einsetzbar.

**Patentansprüche**

**1.** Absolute Winkelcodierung, die mehrere innerhalb von 360° angeordnete Codesequenzen (A, B) aufweist, die in Kombination die 360° eindeutig absolut codieren, von denen eine erste Codesequenz (A) der Länge $L_A$, bestehend aus einer Folge von Codeelementen, einen ersten Winkelsektor einschließt und mehrmals aufeinanderfolgend angeordnet ist, sowie mehrmals zyklisch fortgesetzt ist, eine zweite Codesequenz (B) der Länge $L_B$, bestehend aus einer Folge von Codeelementen, einen zweiten Winkelsektor einschließt und mehrmals aufeinanderfolgend angeordnet ist, sowie mehrmals zyklisch fortgesetzt ist, wobei die Länge $L_A$ der ersten Codesequenz (A) die ganzzahlige Anzahl der Codeelemente der ersten Codesequenz und die Länge $L_B$ der zweiten Codesequenz (B) die ganzzahlige Anzahl der Codeelemente der zweiten Codesequenz (B) ist, und wobei der erste Winkelsektor ungleich dem zweiten Winkelsektor ist, indem die Länge $L_A$ der ersten Codesequenz (A) von der Länge $L_B$ der zweiten Codesequenz (B) abweicht,
zumindest eine der Codesequenzen (A, B) innerhalb der 360° nur teilweise ausgebildet ist und eine Stoßstelle (ST) mit der nachfolgenden Codesequenz (A, B) bildet, und
die Codeelemente der ersten Codesequenz (A) und der zweiten Codesequenz (B) gleiche Winkelsektoren einschließen.

2. Absolute Winkelcodierung nach Anspruch 1, **dadurch gekennzeichnet, dass** sich die Länge $L_A$ der ersten Codesequenz (A) von der Länge $L_B$ der zweiten Codesequenz (B) um 1 unterscheidet.

3. Absolute Winkelcodierung nach einem der vorhergehenden Ansprüche 1 bis 2, **dadurch gekennzeichnet, dass** die erste Codesequenz (A) in einer ersten Spur angeordnet ist und die zweite Codesequenz (B) in einer weiteren Spur angeordnet ist, die konzentrisch zur ersten Spur verläuft.

4. Absolute Winkelcodierung nach Anspruch 3, **dadurch gekennzeichnet, dass** über 360° in der ersten sowie der weiteren Spur jeweils eine gleiche Anzahl
$M_1 < KGV(L_A, L_B)$ von Codeelementen angeordnet ist, mit
$KGV(L_A, L_B)$ = kleinstes gemeinsames Vielfaches von $L_A$ und $L_B$
$L_A$ = ganzzahlige Anzahl der Codeelemente der ersten Codesequenz (A)
$L_B$ = ganzzahlige Anzahl der Codeelemente der zweiten Codesequenz (B).

5. Absolute Winkelcodierung nach Anspruch 4, **dadurch gekennzeichnet, dass** die Anzahl $M_1 = 2^k$ ist, mit $k>4$ und ganzzahlig

6. Absolute Winkelcodierung nach einem der vorhergehenden Ansprüche 1 bis 2, **dadurch gekennzeichnet, dass** die erste Codesequenz (A) und die zweite Codesequenz (B) in einer gemeinsamen Spur angeordnet sind, indem jeweils ein Teil der ersten Codesequenz (A) und ein Teil der zweiten Codesequenz (B) abwechselnd angeordnet ist.

7. Absolute Winkelcodierung nach Anspruch 6, **dadurch gekennzeichnet, dass** über 360° eine Anzahl
$M_2 < 2 * KGV(L_A, L_B)$ Codeelemente angeordnet ist, mit
$KGV(L_A, L_B)$ = kleinstes gemeinsames Vielfaches von $L_A$ und $L_B$
$L_A$ = ganzzahlige Anzahl der Codeelemente der ersten Codesequenz (A)
$L_B$ = ganzzahlige Anzahl der Codeelemente der zweiten Codesequenz (B).

8. Absolute Winkelcodierung nach Anspruch 7, **dadurch gekennzeichnet, dass** die Anzahl $M_2 = 2^k$ ist, mit $k>4$ und ganzzahlig

9. Absolute Winkelcodierung nach einem der vorhergehenden Ansprüche, **dadurch gekennzeichnet, dass** konzentrisch zu der absoluten Winkelcodierung (1, 10) zumindest eine Inkrementalspur (4, 40) angeordnet ist.

10. Absolute Winkelcodierung nach Anspruch 9, **dadurch gekennzeichnet, dass** konzentrisch zu der absoluten Winkelcodierung (1, 10) eine einzige Inkrementalspur (4, 40) angeordnet ist und innerhalb eines Codeelementes eine ganze Zahl größer oder gleich 1 Inkrementalteilungsperioden angeordnet ist.

11. Absolute Winkelmessvorrichtung mit
einer Winkelcodierung (1, 10) nach einem der Ansprüche 1 bis 10, und einer Detektoranordnung (2, 20) zur Abtastung der ersten und der zweiten Codesequenz (A, B) der Winkelcodierung (1, 10) und zur Generierung von Codewörtern (w), und
einer Dekodiereinrichtung (3, 30) zur Dekodierung der Codewörter (w) und zur Generierung von Positionswerten (POS).

12. Absolute Winkelmessvorrichtung nach Anspruch 11, **dadurch gekennzeichnet, dass** die Dekodiereinrichtung (3, 30) einen ersten Wertevorrat ($T_A$) zur Dekodierung einer ersten Folge von Codewörtern ($w_A$) aufweist, die jeweils bei der Abtastung einer der ersten Codesequenzen (A) sowie ihrer zyklischen Fortsetzung entsteht, und
die Dekodiereinrichtung (3, 30) einen zweiten Wertevorrat ($T_B$) zur Dekodierung einer zweiten Folge von Codewörtern ($w_B$) aufweist, die jeweils bei der Abtastung einer der zweiten Codesequenzen (B) sowie ihrer zyklischen Fortsetzung entsteht, und
die Decodiereinrichtung (30) einen weiteren Wertevorrat ($T_{STA}$, $T_{ST}$) aufweist, der zur Decodierung der Stoßstelle (ST) der ersten Codesequenz (A) und / oder der zweiten Codesequenz (B) geeignet ist.

**13.** Absolute Winkelmessvorrichtung nach Anspruch 12, **dadurch gekennzeichnet, dass** der weitere Wertevorrat ($T_{STA}$, $T_{ST}$) in einem programmierbaren Festwertspeicher abgespeichert ist und der erste Wertevorrat ($T_A$) sowie der zweite Wertevorrat ($T_B$) fest verdrahtet vorliegt.

**Claims**

**1.** Absolute angle code which has a plurality of code sequences (A, B) arranged within 360° which, in combination, unambiguously encode the 360° in absolute terms, of which
a first code sequence (A) of length $L_A$, comprising a sequence of code elements, encloses a first angle sector and is arranged many times in succession and is continued cyclically many times, a second code sequence (B) of length $L_B$, comprising a sequence of code elements, encloses a second angle sector and is arranged many times in succession and is continued cyclically many times, wherein the length $L_A$ of the first code sequence (A) is the integer number of the code elements of the first code sequence, and
the length $L_B$ of the second code sequence (B) is the integer number of the code elements of the second code sequence (B), and wherein
the first angle sector is unequal to the second angle sector, in that the length $L_A$ of the first code sequence (A) differs from the length $L_B$ of the second code sequence (B),
at least one of the code sequences (A, B) is formed only partly within the 360°, and forms a discontinuity (ST) with the following code sequence (A, B), and
the code elements of the first code sequence (A) and of the second code sequence (B) enclose equal angle sectors.

**2.** Absolute angle code according to Claim 1, **characterized in that** the length $L_A$ of the first code sequence (A) differs from the length $L_B$ of the second code sequence (B) by 1.

**3.** Absolute angle code according to one of the preceding Claims 1 to 2, **characterized in that** the first code sequence (A) is arranged in a first track and the second code sequence (B) is arranged in a further track, which extends concentrically with respect to the first track.

**4.** Absolute angle code according to Claim 3, **characterized in that** over 360° in the first and the further track, in each case there is arranged an equal number
$M_1 < KGV(L_A, L_B)$ of code elements, with
$KGV(L_A, L_B)$ = smallest common multiple of $L_A$ and $L_B$,
$L_A$ = integer number of the code elements of the first code sequence (A),
$L_B$ = integer number of the code elements of the second code sequence (B).

**5.** Absolute angle code according to Claim 4, **characterized in that** the number $M_1 = 2^k$, with k>4 and integer.

**6.** Absolute angle code according to one of the preceding Claims 1 to 2, **characterized in that** the first code sequence (A) and the second code sequence (B) are arranged in a common track, **in that** in each case part of the first code sequence (A) and part of the second code sequence (B) are arranged alternately.

**7.** Absolute angle code according to Claim 6, **characterized in that**, over 360°, there is arranged a number
$M_2 < 2 * KGV(L_A, L_B)$ of code elements, with
$KGV(L_A, L_B)$ = smallest common multiple of $L_A$ and $L_B$,
$L_A$ = integer number of the code elements of the first code sequence (A),
$L_B$ = integer number of the code elements of the second code sequence (B).

**8.** Absolute angle code according to Claim 7, **characterized in that** the number $M_2 = 2^k$, with k>4 and integer.

**9.** Absolute angle code according to one of the preceding claims, **characterized in that** at least one incremental track (4, 40) is arranged concentrically with respect to the absolute angle code (1, 10).

**10.** Absolute angle code according to Claim 9, **characterized in that** a single incremental track (4, 40) is arranged concentrically with respect to the absolute angle code (1, 10), and within a code element there is arranged a whole number greater than or equal to 1 of incremental graduation periods.

**11.** Absolute angle measuring device having an angle code (1, 10) according to one of Claims 1 to 10, and a detector arrangement (2, 20) for scanning the first and the second code sequence (A, B) of the angle code (1, 10) and for generating code words (w), and

a decoder device (3, 30) for decoding the code words (w) and for generating position values (POS).

12. Absolute angle measuring device according to Claim 11, **characterized in that** the decoder device (3, 30) has a first value store ($T_A$) for decoding a first sequence of code words ($w_A$) which is respectively produced during the scanning of one of the first code sequences (A) and its cyclic continuation, and

the decoder device (3, 30) has a second value store ($T_B$) for decoding a second sequence of code words ($w_B$) which is respectively produced during the scanning of one of the second code sequences (B) and its cyclic continuation, and

the decoder device (30) has a further value store ($T_{STA}$, $T_{ST}$), which is suitable for decoding the discontinuity (ST) of the first code sequence (A) and/or the second code sequence (B).

13. Absolute angle measuring device according to Claim 12, **characterized in that** the further value store ($T_{STA}$, $T_{ST}$) is stored in a programmable read-only memory, and the first value store ($T_A$) and the second value store ($T_B$) are present in hard-wired form.

## Revendications

1. Codeur d'angle absolu, comportant plusieurs séquences de code (A, B) agencées sur 360° qui, en combinaison, codent de manière unique et absolue les 360°, parmi lesquelles

une première séquence de code (A) de longueur $L_A$, constituée d'une série d'éléments de code, délimite un premier secteur angulaire, est agencée consécutivement de multiples fois, et est également prolongée cycliquement de multiples fois,

une deuxième séquence de code (B) de longueur $L_B$, constituée d'une série d'éléments de code, délimite un deuxième secteur angulaire, est agencée consécutivement de multiples fois, et est également prolongée cycliquement de multiples fois, dans lequel la longueur $L_A$ de la première séquence de code (A) est le nombre entier des éléments de code de la première séquence de code et

la longueur $L_B$ de la deuxième séquence de code (B) est le nombre entier des éléments de code de la deuxième séquence de code (B), et dans lequel

le premier secteur angulaire est différent du deuxième secteur angulaire, en ce sens que la longueur $L_A$ de la première séquence de code (A) est différente de la longueur $L_B$ de la deuxième séquence de code (B),

au moins l'une des séquences de code (A, B) n'est réalisée que partiellement sur les 360° et forme un point de jonction (ST) avec la séquence de code suivante (A, B), et

les éléments de code de la première séquence de code (A) et de la deuxième séquence de code (B) délimitent des secteurs angulaires identiques.

2. Codeur d'angle absolu selon la revendication 1, **caractérisé en ce que** la longueur $L_A$ de la première séquence de code (A) diffère de 1 de la longueur $L_B$ de la deuxième séquence de code (B).

3. Codeur d'angle absolu selon l'une quelconque des revendications 1 à 2 précédentes, **caractérisé en ce que** la première séquence de code (A) est disposée dans une première piste et **en ce que** la deuxième séquence de code (B) est disposée dans une autre piste qui s'étend concentriquement par rapport à la première piste.

4. Codeur d'angle absolu selon la revendication 3, **caractérisé en ce que** des nombres identiques $M_1 < KGV(L_A, L_B)$ d'éléments de code sont agencés sur 360° dans la première piste ainsi que dans l'autre piste, avec $KGV(L_A, L_B)$ = plus petit commun multiple de $L_A$ et $L_B$,

$L_A$ = nombre entier des éléments de code de la première séquence de code (A),

$L_B$ = nombre entier des éléments de code de la deuxième séquence de code (B).

5. Codeur d'angle absolu selon la revendication 4, **caractérisé en ce que** le nombre est donné par $M_1 = 2^k$, avec $k>4$ et k étant un nombre entier.

6. Codeur d'angle absolu selon l'une quelconque des revendications 1 à 2 précédentes, **caractérisé en ce que** la première séquence de code (A) et la deuxième séquence de code (B) sont agencées dans une piste commune, en ce sens qu'une partie de la première séquence (A) et qu'une partie de la deuxième séquence de séquence de code (B) sont respectivement disposées de manière alternée.

7. Codeur d'angle absolu selon la revendication 6, **caractérisé en ce qu'**un nombre $M_2 < 2*KGV(L_A, L_B)$ d'éléments de code sont agencés sur 360°, avec
$KGV(L_A, L_B)$ = plus petit commun multiple de $L_A$ et $L_B$,
$L_A$ = nombre entier des éléments de code de la première séquence de code (A),
$L_B$ = nombre entier des éléments de code de la deuxième séquence de code (B).

8. Codeur d'angle absolu selon la revendication 7, **caractérisé en ce que** le nombre est donné par $M_2 = 2^k$, avec $k>4$ et k étant un nombre entier.

9. Codeur d'angle absolu selon l'une quelconque des revendications précédentes, **caractérisé en ce qu'**au moins une piste incrémentielle (4, 40) est agencée concentriquement par rapport au codeur d'angle absolu (1, 10).

10. Codeur d'angle absolu selon la revendication 9, **caractérisé en ce qu'**une piste incrémentielle unique (4, 40) est agencée concentriquement par rapport au codeur d'angle absolu (1, 10) et **en ce qu'**un nombre entier supérieur ou égal à 1 de périodes de division incrémentielles est agencé à l'intérieur d'un élément de code.

11. Dispositif de mesure d'angle absolu comportant un codeur d'angle (1, 10) selon l'une quelconque des revendications 1 à 10, et
un système détecteur (2, 20) destiné à échantillonner les première et deuxième séquences de code (A, B) du codeur d'angle (1, 10) et à générer des mots de code (w), et
un dispositif de décodage (3, 30) destiné à décoder les mots de code (w) et à générer des valeurs de position (POS).

12. Dispositif de mesure d'angle absolu selon la revendication 11, **caractérisé en ce que** le dispositif de décodage (3, 30) comporte une première réserve de valeurs ($T_A$) permettant de décoder une première série de mots de code ($w_A$), laquelle séquence se produit lors de l'échantillonnage de l'une des premières séquences de code (A) ainsi que de leur prolongement cyclique, et
le dispositif de décodage (3, 30) comporte une deuxième réserve de valeurs ($T_B$) permettant de décoder une deuxième série de mots de code ($w_B$), laquelle séquence se produit respectivement lors de l'échantillonnage de l'une des deuxièmes séquences de code (B) ainsi que de leur prolongement cyclique, et
le dispositif de décodage (30) comporte une autre réserve de valeurs ($T_{STA}$, $T_{ST}$) qui est appropriée pour le décodage des points de jonction (ST) de la première séquence de code (A) et/ou de la deuxième séquence de code (B).

13. Dispositif de mesure d'angle absolu selon la revendication 12, **caractérisé en ce que** l'autre réserve de valeurs ($T_{STA}$, $T_{ST}$) est stockée dans une mémoire morte programmable et **en ce que** la première réserve de valeurs ($T_A$) ainsi que la deuxième réserve de valeurs ($T_B$) sont présentes de manière câblée.

FIG. 1

EP 2 340 417 B1

Fig. 2

$W_A$ in $T_A$ gefunden
und
$W_B$ in $T_B$ gefunden

$W_A$ in $T_{STA}$ gefunden
und
$W_B$ in $T_B$ gefunden

Input:
$W_A$, $W_B$

$x_A = T_A(W_A)$
und
$x_B = T_B(W_B)$

$x_{STA} = T_{STA}(W_A)$
und
$x_B = T_B(W_B)$

if $(x_A \leq x_B)$ then
$n = x_B - x_A$
else
$n = (x_B - x_A + L_B)$

POS = $n \cdot L_A + x_A$

POS = $x_{STA}$ + OFFSET

*Allgemein:* OFFSET = $(M_1)$ − *(Abtastlänge -1)* =
$16 - (4-1) = 16 - 3 = 13$

Fig. 3

| W1 | W2 | xA | xB | xSTA | n | POS |
|------|------|----|----|------|---|-----|
| 0111 | 0100 | 0 | 0 | | 0 | 0 |
| 1111 | 1000 | 1 | 1 | | 0 | 1 |
| 1110 | 0001 | 2 | 2 | | 0 | 2 |
| 1101 | 0010 | 3 | 3 | | 0 | 3 |
| 1011 | 0100 | 4 | 0 | | 0 | 4 |
| 0111 | 1000 | 0 | 1 | | 1 | 5 |
| 1111 | 0001 | 1 | 2 | | 1 | 6 |
| 1110 | 0010 | 2 | 3 | | 1 | 7 |
| 1101 | 0100 | 3 | 0 | | 1 | 8 |
| 1011 | 1000 | 4 | 1 | | 1 | 9 |
| 0111 | 0001 | 0 | 2 | | 2 | 10 |
| 1111 | 0010 | 1 | 3 | | 2 | 11 |
| 1110 | 0100 | 2 | 0 | | 2 | 12 |
| 1100 | 1000 | | 1 | 0 | | 13 |
| 1001 | 0001 | | 2 | 1 | | 14 |
| 0011 | 0010 | | 3 | 2 | | 15 |

FIG. 4

# Fig. 5

Bitpattern

W1          W2

Fig. 6

**Rechenvorschrift R1:**
if $(x_A \leq x_B)$ then
   $n = x_B - x_A$
else
   $n = (x_B - x_A + L_B)$
$POS = 2 \cdot (n \cdot L_A + x_A)$

**Rechenvorschrift R2:**
if $(x_A \leq x_B + 1)$ then
   $n = x_B - x_A + 1$
else
   $n = (x_B - x_A + L_B + 1)$
if $[(x_A = 0) \& (x_B = 3)]$
   $POS = 31$
else
   $POS = 2 \cdot (n \cdot L_A + x_A) - 1$

**Rechenvorschrift R3:**
$OFFSET = 25$
$POS = 2 \cdot x_B + OFFSET$

**Rechenvorschrift R4:**
$OFFSET = 25$
$POS = 2 \cdot x_B + OFFSET - 1$

Bitpattern
Wörter w1, w2

**Auffüllen**

|          | w1 | w2 |
| -------- | -- | -- |
| $T_A$    |    |    |
| $T_B$    |    |    |
| $T_{STA}$ |   |    |

|           | w1 | w2 |
| --------- | -- | -- |
| $T_A$     | 1  | 0  |
| $T_B$     | 0  | 1  |
| $T_{STA}$ | 0  | 0  |

|           | w1 | w2 |
| --------- | -- | -- |
| $T_A$     | 0  | 1  |
| $T_B$     | 1  | 0  |
| $T_{STA}$ | 0  | 0  |

|           | w1 | w2 |
| --------- | -- | -- |
| $T_A$     | 0  | 0  |
| $T_B$     | 1  | 0  |
| $T_{STA}$ | 0  | 1  |

|           | w1 | w2 |
| --------- | -- | -- |
| $T_A$     | 0  | 0  |
| $T_B$     | 0  | 1  |
| $T_{STA}$ | 1  | 0  |

R1    R2    R3    R4

POS

## Fig. 7

| W | W1 | W2 | W1 in TA? | W1 in TB? | W1 in TSTA? | W2 in TA? | W2 in TB? | W2 in TSTA? | RV | xA |
|---|---|---|---|---|---|---|---|---|---|---|
| 00111010 | 0111 | 0100 | 1 | 0 | 0 | 0 | 1 | 0 | R1 | 0 |
| 01110101 | 0100 | 1111 | 0 | 1 | 0 | 1 | 0 | 0 | R2 | 1 |
| 11101010 | 1111 | 1000 | 1 | 0 | 0 | 0 | 1 | 0 | R1 | 1 |
| 11010100 | 1000 | 1110 | 0 | 1 | 0 | 1 | 0 | 0 | R2 | 2 |
| 10101001 | 1110 | 0001 | 1 | 0 | 0 | 0 | 1 | 0 | R1 | 2 |
| 01010011 | 0001 | 1101 | 0 | 1 | 0 | 1 | 0 | 0 | R2 | 3 |
| 10100110 | 1101 | 0010 | 1 | 0 | 0 | 0 | 1 | 0 | R1 | 3 |
| 01001101 | 0010 | 1011 | 0 | 1 | 0 | 1 | 0 | 0 | R2 | 4 |
| 10011010 | 1011 | 0100 | 1 | 0 | 0 | 0 | 1 | 0 | R1 | 4 |
| 00110101 | 0100 | 0111 | 0 | 1 | 0 | 1 | 0 | 0 | R2 | 0 |
| 01101010 | 0111 | 1000 | 1 | 0 | 0 | 0 | 1 | 0 | R1 | 0 |
| 11010101 | 1000 | 1111 | 0 | 1 | 0 | 1 | 0 | 0 | R2 | 1 |
| 10101011 | 1111 | 0001 | 1 | 0 | 0 | 0 | 1 | 0 | R1 | 1 |
| 01010110 | 0001 | 1110 | 0 | 1 | 0 | 1 | 0 | 0 | R2 | 2 |
| 10101100 | 1110 | 0010 | 1 | 0 | 0 | 0 | 1 | 0 | R1 | 2 |
| 01011001 | 0010 | 1101 | 0 | 1 | 0 | 1 | 0 | 0 | R2 | 3 |
| 10110010 | 1101 | 0100 | 1 | 0 | 0 | 0 | 1 | 0 | R1 | 3 |
| 01100101 | 0100 | 1011 | 0 | 1 | 0 | 1 | 0 | 0 | R2 | 4 |
| 11001010 | 1011 | 1000 | 1 | 0 | 0 | 0 | 1 | 0 | R1 | 4 |
| 10010101 | 1000 | 0111 | 0 | 1 | 0 | 1 | 0 | 0 | R2 | 0 |
| 00101011 | 0111 | 0001 | 1 | 0 | 0 | 0 | 1 | 0 | R1 | 0 |
| 01010111 | 0001 | 1111 | 0 | 1 | 0 | 1 | 0 | 0 | R2 | 1 |
| 10101110 | 1111 | 0010 | 1 | 0 | 0 | 0 | 1 | 0 | R1 | 1 |
| 01011100 | 0010 | 1110 | 0 | 1 | 0 | 1 | 0 | 0 | R2 | 2 |
| 10111000 | 1110 | 0100 | 1 | 0 | 0 | 0 | 1 | 0 | R1 | 2 |
| 01110000 | 0100 | 1100 | 0 | 1 | 0 | 0 | 0 | 1 | R3 | |
| 11100000 | 1100 | 1000 | 0 | 0 | 1 | 0 | 1 | 0 | R4 | |
| 11000001 | 1000 | 1001 | 0 | 1 | 0 | 0 | 0 | 1 | R3 | |
| 10000011 | 1001 | 0001 | 0 | 0 | 1 | 0 | 1 | 0 | R4 | |
| 00000111 | 0001 | 0011 | 0 | 1 | 0 | 0 | 0 | 1 | R3 | |
| 00001110 | 0011 | 0010 | 0 | 0 | 1 | 0 | 1 | 0 | R4 | |
| 00011101 | 0010 | 0111 | 0 | 1 | 0 | 1 | 0 | 0 | R2 | 0 |

**IN DER BESCHREIBUNG AUFGEFÜHRTE DOKUMENTE**

**In der Beschreibung aufgeführte Patentdokumente**

- US 6330522 B1